# EUROPEAN PATENT APPLICATION

(11) **EP 4 510 415 A1**
(43) Date of publication of application: **19.02.2025**
(21) Application number: 22945150.5
(22) Date of filing: 06.06.2022
(51) Int. Cl.: H02J 7/00

(54) **CONTROL METHOD FOR ENERGY STORAGE SYSTEM, AND ENERGY STORAGE SYSTEM**

(71) Applicant: Contemporary Amperex Technology Co., Limited, Ningde, Fujian 352100 (CN)
(72) Inventor: LI, Meng, Ningde, Fujian 352100 (CN); LU, Yanhua, Ningde, Fujian 352100 (CN); YU, Dongxu, Ningde, Fujian 352100 (CN); WU, Guoxiu, Ningde, Fujian 352100 (CN); LIANG, Liliuyuan, Ningde, Fujian 352100 (CN); XU, Xiangxiang, Ningde, Fujian 352100 (CN); LUO, Bingtuan, Ningde, Fujian 352100 (CN)
(74) Representative: Holt, Lucy Rose
(86) International application number: PCT/CN2022/097046
(87) International publication number: WO 2023/236000

(57) **Abstract**

The present application provides a control method for an energy storage system, and an energy storage system. The energy storage system comprises N energy storage submodules, N being a positive integer greater than 1. The control method for an energy storage system comprises: obtaining a battery state of charge (SOC) and charging/discharging limit current of each energy storage submodule of N energy storage submodules; and controlling the operating state of the N energy storage submodules according to the SOC and the charging/discharging limit current of each energy storage submodule, the operating state comprising an input state and a removed state. According to the technical solution provided in the embodiments of the present application, the problem of SOC imbalance among the energy storage submodules can be solved, thereby improving the utilization rate of the energy storage system.

## Description

### TECHNICAL FIELD

The present application relates to the field of energy storage, in particular to a control method for an energy storage system and the energy storage system.

### BACKGROUND

In order to enhance the active power regulation capability of a voltage source converter based high voltage direct current transmission (VSC-HVDC) system and give full play to the role of the VSC-HVDC system to participate in power grid supporting, the application of an energy storage system in the VSC-HVDC system has important research significance.

The energy storage system in the VSC-HVDC system mainly realizes energy storage by connecting energy storage sub-modules in series to form an ultra-high voltage. The switching strategy of the energy storage sub-modules affects the utilization rate of the energy storage system.

Therefore, how to improve the utilization rate of the energy storage system is an urgent problem to be solved.

### SUMMARY

The present application provides a control method for an energy storage system and the energy storage system, which can solve the problem of state of charge (SOC) imbalance among energy storage sub-modules, thereby improving the utilization rate of the energy storage system.

In a first aspect, a control method for an energy storage system is provided. The energy storage system includes N energy storage sub-modules, where N is a positive integer greater than 1. The method includes: acquiring an SOC and a charge-discharge limiting current of each of the N energy storage sub-modules; and controlling working states of the N energy storage sub-modules according to the SOC and the charge-discharge limiting current of each of the energy storage sub-modules, where the working states include a switched-on state and a switched-off state.

According to the embodiment of the present application, in a case that the states of the N energy storage sub-modules in the energy storage system are not determined, the SOC and the charge-discharge limiting current of each energy storage sub-module in the N energy storage sub-modules are firstly acquired, and then the state of each energy storage sub-module is controlled according to the SOC and the charge-discharge limiting current of each energy storage sub-module, that is, the working state of each energy storage sub-module is controlled to be a switched-on state or a switched-off state. Therefore, the states of the energy storage sub-modules are controlled according to the SOC and the charge-discharge limiting current of each energy storage sub-module, which may realize the SOC balance among the energy storage sub-modules, and avoid the decrease of the available capacity of the energy storage system caused by the SOC imbalance of the energy storage sub-modules, thereby improving the utilization rate of the energy storage system.

In one possible embodiment, the method further includes: acquiring a charge-discharge limiting current of the energy storage system; and controlling the states of the N energy storage sub-modules includes: controlling the states of the N energy storage sub-modules according to the SOC of each of the energy storage sub-modules, the charge-discharge limiting current of each of the energy storage sub-modules, and the charge-discharge limiting current of the energy storage system.

In the embodiment of the present application, the switching strategy of the energy storage sub-module is determined according to the three aspects: the SOC of each energy storage sub-module, the charge-discharge limiting current of each energy storage sub-module, and the charge-discharge limiting current of the energy storage system, which may avoid the problem that the charge-discharge limiting current of the energy storage system is affected by the charge-discharge limiting current of a single energy storage sub-module to cause that the whole energy storage system cannot be normally charged and discharged, thereby improving the reliability of the system.

In one possible embodiment, controlling the states of the N energy storage sub-modules according to the SOC of each of the energy storage sub-modules, the charge-discharge limiting current of each of the energy storage sub-modules, and the charge-discharge limiting current of the energy storage system includes: in a case that I₁ is greater than or equal to I₂, determining n energy storage sub-modules in the N energy storage sub-modules according to the SOC of each of the energy storage sub-modules, controlling the n energy storage sub-modules to be in switched-on states, and controlling remaining energy storage sub-modules in the N energy storage sub-modules to be in switched-off states, where, I₁ is a minimum charge-discharge limiting current in the charge-discharge limiting currents of the N energy storage sub-modules, I₂ is the charge-discharge limiting current of the energy storage system, and n is a number of the energy storage sub-modules needing to be switched on.

In the embodiment of the present application, when the minimum charge-discharge limiting current in all the energy storage sub-modules is greater than that of the energy storage system, the N energy storage sub-modules all meet the switching requirements. At this time, only n energy storage sub-modules need to be selected to be in switched-on states, and the remaining energy storage sub-modules are in switched-off states.

In one possible embodiment, determining n energy storage sub-modules includes: selecting n energy storage sub-modules with the minimum in a case that the energy storage system is charged.

In the embodiment of the present application, when the minimum charge-discharge limiting current in all the energy storage sub-modules is greater than that of the energy storage system, the N energy storage sub-modules all meet the switching requirements. In a case that the system is charged, n energy storage sub-modules with the minimum SOCs are selected to be in switched-on states, that is, the n energy storage sub-modules with the minimum SOCs are charged, and the remaining energy storage sub-modules with high SOCs are kept still, so that the SOC balance among the sub-modules may be realized to the greatest extent.

In one possible embodiment, determining n energy storage sub-modules includes: selecting n energy storage sub-modules with the maximum SOCs in the N energy storage sub-modules in a case that the energy storage sub-modules are discharged.

In the embodiment of the present application, when the minimum charge-discharge limiting current in all the energy storage sub-modules is greater than that of the energy storage system, the N energy storage sub-modules all meet the switching requirements. In a case that the system is discharged, n energy storage sub-modules with the maximum SOCs are selected to be in switched-on states, that is, the n energy storage sub-modules with the maximum SOCs are discharged, and the remaining energy storage sub-modules with low SOCs are kept still, so that the SOC balance among the energy storage sub-modules may be better realized.

In one possible embodiment, controlling the states of the N energy storage sub-modules according to the SOC of each of the energy storage sub-modules, the charge-discharge limiting current of each of the energy storage sub-modules, and the charge-discharge limiting current of the energy storage system includes: in a case that I₁ is less than I₂ and M is greater than or equal to n, determining n energy storage sub-modules in the M energy storage sub-modules according to the SOC of each of the energy storage sub-modules, controlling the n energy storage sub-modules to be in switched-on states, and controlling remaining energy storage sub-modules in the M energy storage sub-modules to be in switched-off states, where, I₁ is a minimum charge-discharge limiting current in the charge-discharge limiting currents of the N energy storage sub-modules, I₂ is the charge-discharge limiting current of the energy storage system, M is a number of the energy storage sub-modules of which the charge-discharge limiting currents are not less than I₂, the M energy storage sub-modules are the energy storage sub-modules of which the charge-discharge limiting currents are not less than that of the energy storage system, and n is a number of the energy storage sub-modules needing to be switched on.

In an embodiment of the present application, in a case that I₁ is less than I₂ and M is greater than or equal to n, only the charge-discharge limiting current of M energy storage sub-modules is greater than that of the energy storage system, that is, only the M energy storage sub-modules meet the switching requirements. At this time, n energy storage sub-modules are selected from the M energy storage sub-modules to be in switched-on states, and the remaining energy storage sub-modules are in the switched-off states.

In one possible embodiment, determining n energy storage sub-modules includes: selecting n energy storage sub-modules with the minimum SOCs from the M energy storage sub-modules in a case that the energy storage system is charged.

In the embodiment of the present application, when M energy storage sub-modules meet the switching strategy, n energy storage sub-modules are selected from the M energy storage sub-modules to be switched into the energy storage system. In a case that the system is charged, n energy storage sub-modules with the minimum SOCs are selected to be in switched-on states, that is, the n energy storage sub-modules with the minimum SOCs are charged, and the remaining energy storage sub-modules with high SOCs in the M energy storage modules are kept still, so that the SOC imbalance among the M energy storage sub-modules may be realized to the greatest extent.

In one possible embodiment, determining n energy storage sub-modules includes: selecting n energy storage sub-modules with the maximum SOCs from the M energy storage sub-modules in a case that the energy storage system is discharged.

In the embodiment of the present application, when M energy storage sub-modules meet the switching strategy, n energy storage sub-modules are selected from the M energy storage sub-modules to be switched into the energy storage system. In a case that the system is discharged, n energy storage sub-modules with the maximum SOCs are selected to be in switched-on states, that is, the n energy storage sub-modules with the maximum SOCs are discharged, and the remaining energy storage sub-modules with low SOCs in the M energy storage sub-modules are kept still, so that the SOC imbalance problem among the M energy storage sub-modules is solved to the greatest degree.

In one possible embodiment, the method further includes: in a case that I₁ is less than I₂ and M is less than n, controlling the energy storage system to decrease a value of n, or controlling the energy storage system to be shut down, where, I₁ is a minimum charge-discharge limiting current in the charge-discharge limiting currents of the N energy storage sub-modules, I₂ is the charge-discharge limiting current of the energy storage system, M is a number of the energy storage sub-modules of which the charge-discharge limiting currents are not less than I₂, and n is a number of the energy storage sub-modules needing to be switched on.

In an embodiment of the present application, n is a number of energy storage sub-modules needing to be switched on in the energy storage system. When the number M of the energy storage sub-modules of which the charge-discharge limiting current is greater than that of the energy storage system is less than n, the number of the energy storage sub-modules that meet the switching requirements cannot meet the requirements of the energy storage system. At this time, the output power of the energy storage system needs to be reduced, that is, the number of energy storage sub-modules needing to be switched on in the energy storage system is decreased to maintain the normal operation of the system or shut down the system.

In a second aspect, an energy storage system is provided, including: N energy storage sub-modules, where N is a positive integer greater than 1; and a controller, configured to acquire an SOC and a charge-discharge limiting current of each energy storage sub-module in the N energy storage sub-modules, and control working states of the N energy storage sub-modules according to the SOC and the charge-discharge limiting current of each energy storage sub-module, where the working states include a switch-on state or a switch-off state.

In one possible embodiment, the controller is configured to: acquire a charge-discharge limiting current of the energy storage system; and controlling the states of the N energy storage sub-modules includes: controlling the states of the N energy storage sub-modules according to the SOC of each of the energy storage sub-modules, the charge-discharge limiting current of each of the energy storage sub-modules and the charge-discharge limiting current of the energy storage system.

In one possible embodiment, the controller is configured to: in a case that I₁ is greater than or equal to I₂, determine n energy storage sub-modules in the N energy storage sub-modules according to the SOC of each of the energy storage sub-modules, control the n energy storage sub-modules to be in switched-on states, and control remaining energy storage sub-modules in the N energy storage sub-modules to be in switched-off states, where, I₁ is a minimum charge-discharge limiting current in the charge-discharge limiting currents of the N energy storage sub-modules, I₂ is the charge-discharge limiting current of the energy storage system, and n is a number of the energy storage sub-modules needing to be switched on.

In one possible embodiment, the controller is configured to: select the n energy storage sub-modules with minimum SOCs from the N energy storage sub-modules in a case that the energy storage system is charged.

In one possible embodiment, the controller is configured to: select the n energy storage sub-modules with maximum SOCs from the N energy storage sub-modules in a case that the energy storage system is discharged.

In one possible embodiment, the controller is configured to: in a case that I₁ is less than I₂ and M is greater than or equal to n, determine n energy storage sub-modules in the M energy storage sub-modules according to the SOC of each of the energy storage sub-modules, control the n energy storage sub-modules to be in switched-on states, and control remaining energy storage sub-modules in the M energy storage sub-modules to be in switched-off states, where, I₁ is a minimum charge-discharge limiting current in the charge-discharge limiting currents of the N energy storage sub-modules, I₂ is the charge-discharge limiting current of the energy storage system, M is a number of the energy storage sub-modules of which the charge-discharge limiting currents are not less than I₂, the M energy storage sub-modules are the energy storage sub-modules of which the charge-discharge limiting currents are not less than that of the energy storage system, and n is a number of the energy storage sub-modules needing to be switched on.

In one possible embodiment, the controller is configured to: select the n energy storage sub-modules with minimum SOCs from the M energy storage sub-modules in a case that the energy storage system is charged.

In one possible embodiment, the controller is configured to: select the n energy storage sub-modules with maximum SOCs from the M energy storage sub-modules in a case that the energy storage system is discharged.

In one possible embodiment, the controller is configured to: control the energy storage system to decrease a value of n or control the energy storage system to stop operating in the case that I₁ is less than I₂ and M is less than n, where, I₁ is a minimum charge-discharge limiting current in the charge-discharge limiting currents of the N energy storage sub-modules, I₂ is the charge-discharge limiting current of the energy storage system, M is a number of the energy storage sub-modules of which the charge-discharge limiting currents are not less than I₂, and n is a number of the energy storage sub-modules needing to be switched on.

In a third aspect, a device for controlling an energy storage system is provided, including: a processor and a memory, where, the memory is configured to store a computer program, and the processor is configured to invoke the computer program to enable the device to implement the method of any one possible embodiment in the first aspect.

In a fourth aspect, a readable storage medium is provided. The readable storage medium store a computer program, and the computer program, when executed by a computing device, causes the computing device to implement the method of any one possible embodiment of the first aspect.

### BRIEF DESCRIPTION OF THE DRAWINGS

**In** order to more clearly illustrate the technical solutions of the embodiments of the present application, the accompanying drawings required to be used in the embodiments of the present application will be briefly introduced below. Obviously, the accompanying drawings described below are only some embodiments of the present application, and those skilled in the art can also obtain other accompanying drawings according to the accompanying drawings without creative work.
FIG. 1 is a schematic diagram of an energy storage system applied in the present application;
FIG. 2 is a schematic structural diagram of an energy storage sub-module according to an embodiment of the present application;
FIG. 3 is a schematic structural diagram of an energy storage sub-module according to another embodiment of the present application;
FIG. 4 is a schematic flowchart of a control method of an energy storage system according to an embodiment of the present application;
FIG. 5 is a schematic flowchart of a control method of an energy storage system according to another embodiment of the present application;
FIG. 6 is a flowchart of a control method of an energy storage system according to yet another embodiment of the present application;
FIG. 7 is a schematic block diagram of an energy storage system according to an embodiment of the present application; and
FIG. 8 is a schematic block diagram of a device for controlling an energy storage system according to an embodiment of the present application.

### BRIEF DESCRIPTION OF DRAWINGS

In order to make the objective, technical solutions and advantages of the embodiments of the present application clearer, the technical solutions in the embodiments of the present application will be clearly described below in combination with the accompanying drawings in the embodiments of the present application. Obviously, the described embodiments are part of the embodiments of the present application, but not all of the embodiments. Based on the embodiments in the present application, all other embodiments obtained by those of ordinary skill in the art without creative work are within the scope of protection of the present application.

Unless otherwise defined, all technical and scientific terms used in the present application have the same meaning as commonly understood by one of ordinary skill in the art to which the present application pertains. The terms used in the description of the present application are for the purpose of describing specific embodiments only and are not intended to limit the present application. The terms "including" and "having" and any variations thereof in the specification and claims of the present application and the above brief description of the drawings are intended to cover a non-exclusive inclusion. The terms "first", "second", and so on in the description and claims or accompanying drawings of the present application are intended to distinguish different objects, but not to describe particular sequences or primary-secondary relationship.

"Embodiments" mentioned in the present application mean that specific characteristics, structures or features described in combination with embodiments can be comprised in at least one embodiment of the present application. The occurrence of the phrase in various places in the specification are not necessarily all referring to the same embodiment, nor are separate or alternative embodiments mutually exclusive of other embodiments. A person skilled in the art understands implicitly and explicitly that embodiments described in the present application can be combined with other embodiments.

In the description of the present application, it should be noted that, unless otherwise specified and limited, the terms "mounted", "connected", "connection", "attached" and "disposed" should be interpreted broadly, for example, they may be in fixed connection, detachable connection or integral connection; they may be directly connected or indirectly connected through an intermediate medium; or they may be interconnected between two elements. For those of ordinary skill in the art, the specific meanings of the above terms in the present application may be understood according to the specific circumstances.

The term "and/or" in the present application is only an association relationship describing an association object, indicating that there may be three relationships, for example, A and/or B may indicate that A exists alone, A and B exist simultaneously, and B exists alone. In addition, the character "/" in the present application generally indicates that the association object is in a relationship of "or".

VSC-HVDC is a new generation of HVDC technology, which structurally includes a converter station and a HVDC line (usually a DC cable), and the converter station includes a converter, converter transformer equipment, converter impedance equipment and so on. Different from the current source converter type HVDC based on phase-controlled commutation technology, the converter in VSC-HVDC is a voltage source converter, which is characterized by the use of turn-off devices and high-frequency modulation technology. The VSC-HVDC has the advantages of supplying power to a passive network, having no commutation failure and no communication between converter stations, and being likely to form a multi-terminal DC system.

In order to enhance the active power regulation capability of a VSC-HVDC system and give full play to the role of the VSC-HVDC system in power grid supporting, the application of an energy storage system in the VSC-HVDC system has important research significance. The application of the energy storage system in the VSC-HVDC system has the following three main functions: (1) the VSC-HVDC is an effective way to connect new energy to the power grid, and the application of the energy storage system in the VSC-HVDC system can effectively suppress the adverse effects of the inherent fluctuations of new energy on the power grid; (2) by applying the energy storage system in the VSC-HVDC system, the power impact on the power grid caused by faults may be reduced, and the stability and security of a power system may be improved; and (3) power surplus is an important problem that threatens the safe operation of the VSC-HVDC system, and by using the energy storage system to store surplus power, the fault defense capability of the system may be guaranteed and the operation reliability of the VSC-HVDC system may be improved.

Therefore, the performance of the energy storage system has an important impact on the VSC-HVDC system. The energy storage system realizes energy storage by connecting energy storage sub-modules in series to form ultra-high voltage. The charge-discharge limiting current of a single energy storage sub-module will affect the charge-discharge limiting current of the energy storage system, which reduces the reliability of the energy storage system, and then affects the normal charge and discharge of the VSC-HVDC system. Meanwhile, the SOC imbalance of the energy storage sub-modules may lead to the decrease of the available capacity of the energy storage system, and reduce the utilization rate of the energy storage system.

In view of this, the embodiments of the present application provide a control method for an energy storage system and the energy storage system. The states of the energy storage sub-modules are controlled according to the SOC and the charge-discharge limiting current of each energy storage sub-module, and the problem of SOC imbalance among the energy storage sub-modules can be solved, thereby improving the utilization rate of the energy storage system.

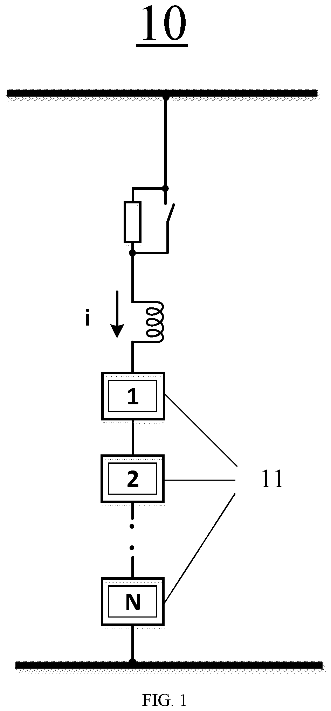

FIG. 1 is a schematic diagram of an energy storage system applied in the present application. As shown in FIG. 1, the energy storage system 10 includes N energy storage sub-modules 11, where N is a positive integer greater than 1, and each energy storage sub-module in the N energy storage sub-modules 11 may be arranged in series.

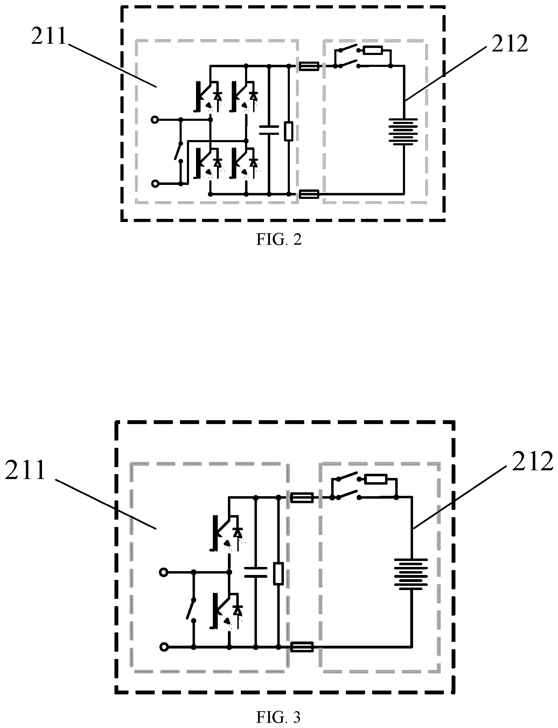

FIG. 2 is a schematic structural diagram of an energy storage sub-module according to an embodiment of the present application. FIG. 3 is a schematic structural diagram of an energy storage sub-module according to another embodiment of the present application. As shown in FIG. 2 and FIG. 3, the energy storage sub-module includes a power module 211 and a battery module 212. When the power module 211 in the energy storage sub-module is in the switched-on state, the battery module 212 connected to the power module 211 is in the charging or discharging state. When the power module 211 is in the switched-off state, the battery module 312 in contact with the power module 211 is in the stilling state.

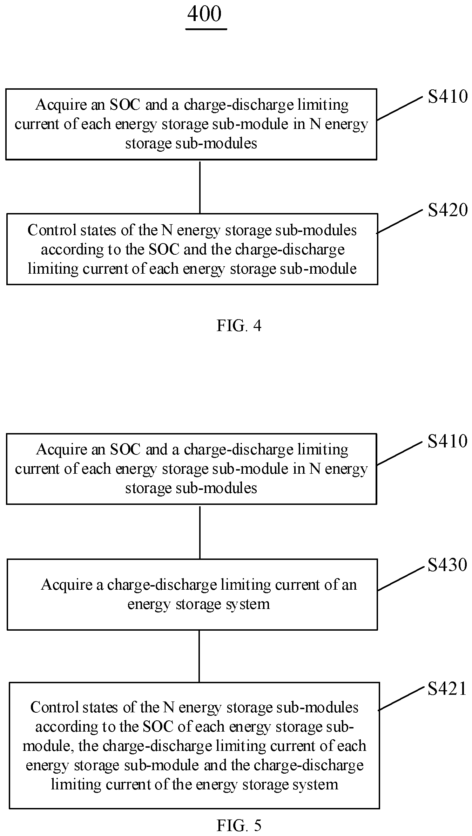

FIG. 4 is a schematic flowchart of a control method of an energy storage system according to an embodiment of the present application. The energy storage system includes N energy storage sub-modules, where N is a positive integer greater than 1. For example, the energy storage system may be an energy storage system as shown in FIG. 1. As shown in FIG. 4, the method 400 includes:
S410: acquiring an SOC and a charge-discharge limiting current of each energy storage sub-module in N energy storage sub-modules; and
S420: controlling working states of the N energy storage sub-modules according to the SOC and the charge-discharge limiting current of each energy storage sub-module.

The working states include a switching-on state and a switching-off state.

In the embodiment of the present application, the SOC is a ratio of the capacity of a battery that has been used for a period of time or left unused for a long time to its capacity in a fully charged state, usually expressed as a percentage. The value range of the SOC is 0-1. When SOC is equal to 0, it means that the battery is fully discharged, and when SOC is equal to 1, it means that the battery is fully charged.

The N energy storage sub-modules constitute the energy storage system, so that the available capacity of the batteries of the N energy storage sub-modules constitutes the available capacity of the system. When the SOC difference between the energy storage sub-modules is too great, the system always gives priority to the energy storage sub-module with higher SOC, and puts the energy storage sub-module with lower SOC aside, which will cause the available capacity of the energy storage system to decrease over time, and reduce the utilization rate of the energy storage system.

When the energy storage sub-module is in a switched-on state, the energy storage sub-module participates in the work of the energy storage system; and when the energy storage sub-module is in a switched-off state, the energy storage sub-module is in a standing state and does not participate in the work of the energy storage system.

In the above solution, before the states of the N energy storage sub-modules in the energy storage system are not determined, the SOC and the charge-discharge limiting current of each energy storage sub-module in the N sub-modules are first acquired. The state of each energy storage sub-module is controlled according to the SOC and the charge-discharge limiting current of each energy storage sub-module. In this way, the state of each energy storage sub-module is controlled according to the SOC and the charge-discharge limiting current of each energy storage sub-module, so that the SOC balance among the energy storage sub-modules may be realized, the decrease of the available capacity of the energy storage system caused by the SOC imbalance among the energy storage sub-modules is avoided, and the utilization rate of the energy storage system is further improved.

FIG. 5 is a schematic flowchart of a control method of an energy storage system according to another embodiment of the present application. As shown in FIG. 5, the method 400 may further include:
S430: acquiring a charge-discharge limiting current of the energy storage system; and
accordingly, the above S420 may specifically be:
   S421: controlling states of the N energy storage sub-modules according to the SOC of each energy storage sub-module, the charge-discharge limiting current of each energy storage sub-module, and the charge-discharge limiting current of the energy storage system.

Whether the charge-discharge limiting current of the energy storage sub-module is greater than that of the energy storage system is the premise of whether the energy storage sub-module can participate in the switching on in the energy storage system. Therefore, when controlling the state of each energy storage sub-module according to the SOC and the charge-discharge limiting current of each energy storage sub-module, it is first necessary to determine whether each energy storage sub-module can participate in the switching on in the energy storage system.

In the above solution, the switching strategy of the energy storage sub-module is determined according to the SOC of each energy storage system sub-module, the charge-discharge limiting current of each energy storage sub-module, and the charge-discharge limiting current of the energy storage system, which may avoid the problem that the charge-discharge limiting current of the energy storage system is affected by the charge-discharge limiting current of a single energy storage sub-module to cause that the whole energy storage system cannot be normally charged and discharged, thereby improving the reliability of the system.

Optionally, in S421, in a case that I₁ is greater than or equal to I₂, n energy storage sub-modules are determined according to the SOC of each energy storage sub-module in the N energy storage sub-modules, the n energy storage sub-modules are controlled to be in the switched-on state, and the remaining energy storage sub-modules in the N energy storage sub-modules are controlled to be in the switched-off state, where, I₁ is a minimum charge-discharge limiting current in the charge-discharge limiting currents of the N energy storage sub-modules, I₂ is the charge-discharge limiting current of the energy storage system, and n is a number of the energy storage sub-modules needing to be switched on.

In the above solution, when the minimum charge-discharge limiting current of all the energy storage sub-modules is greater than that of the energy storage system, the N energy storage sub-modules all meet the switching requirements. At this time, only n energy storage sub-modules need to be selected to be in the switched-on state, and the remaining energy storage sub-modules are in the switched-off state, so as to meet the requirements of the energy storage system.

Optionally, in a case that the energy storage system is charged, n energy storage sub-modules with the minimum are selected.

When the minimum charge-discharge limiting current of all the energy storage sub-modules is greater than that of the energy storage system, the N energy storage sub-modules all meet the switching requirements. When the system is charged, the battery module in the energy storage sub-module is also in a charging state, and at this time, the power module connected to the battery module needs to be switched on in the energy storage system.

In the above solution, when the system is charged, n energy storage sub-modules with the minimum SOCs are selected to be in the switched-on states, that is, the n energy storage sub-modules with the minimum SOCs are charged, so that the SOC balance among the sub-modules may be realized to the greatest extent.

Optionally, in a case that the energy storage sub-modules are discharged, n energy storage sub-modules with the maximum SOCs in the N energy storage submodules are selected.

When the minimum charge-discharge limiting current of all the energy storage sub-modules is greater than that of the energy storage system, the N energy storage sub-modules all meet the switching requirements. When the system is discharged, the battery module in the energy storage sub-module is also in the discharging state, and the power module connected to the battery module needs to be switched on in the energy storage system.

In the above solution, in a case that the system is discharged, n energy storage sub-modules with the maximum SOCs are selected to be in switched-on states, that is, the n energy storage sub-modules with the maximum SOCs are discharged, and the remaining energy storage sub-modules with low SOCs are kept still, so that the SOC balance among the energy storage sub-modules may be realized to the greatest degree.

Optionally, in S421, in a case that I₁ is less than I₂ and M is greater than or equal to n, n energy storage sub-modules are determined in the M energy storage sub-modules according to the SOC of each energy storage sub-module, the n energy storage sub-modules are controlled to be in the switched-on state, and the remaining energy storage sub-modules in the M energy storage sub-modules are controlled to be in the switched-off state, where, I₁ is a minimum charge-discharge limiting current in the charge-discharge limiting currents of the N energy storage sub-modules, I₂ is the charge-discharge limiting current of the energy storage system, M is a number of the energy storage sub-modules of which the charge-discharge limiting currents are not less than I₂, the M energy storage sub-modules are the energy storage sub-modules of which the charge-discharge limiting currents are not less than that of the energy storage system, and n is a number of the energy storage sub-modules needing to be switched on.

When I₁ is less than I₂, the charge-discharge limiting current of some of the N energy storage sub-modules is less than that of the energy storage system, these energy storage sub-modules of which the charge-discharge limiting currents are less than that of the energy storage system cannot participate in the switching in the energy storage system regardless of SOC values. The M energy storage sub-modules of which the charge-discharge limiting currents are not less than that of the energy storage system can participate in the switching.

In the above solution, in a case that I₁ is less than I₂ and M is greater than or equal to n, only the charge-discharge limiting current of M energy storage sub-modules is greater than that of the energy storage system, that is, only M energy storage sub-modules meet the switching requirements. At this time, n energy storage sub-modules are selected from the M energy storage sub-modules to be in switched-on states, and the remaining energy storage sub-modules are in the switched-off states.

Optionally, in a case that the energy storage system is charged, n energy storage sub-modules with the minimum SOCs in the M energy storage sub-modules are selected.

When only the charge-discharge limiting current of the M energy storage sub-modules is greater than that of the energy storage system, the M energy storage sub-modules meet the switching requirements. When the system is charged, the battery module in the energy storage sub-module is also in a charging state, and at this time, the power module connected to the battery module needs to be switched on in the energy storage system.

In the above solution, when n energy storage sub-modules need to be switched on in the energy storage system, the n energy storage sub-modules are selected from the M energy storage sub-modules to be switched in the energy storage system. In a case that the system is charged, n energy storage sub-modules with the minimum SOCs are selected to be in switched-on states, that is, the n energy storage sub-modules with the minimum SOCs are charged, and the remaining energy storage sub-modules with high SOCs in the M energy storage sub-modules are kept still, so that the SOC balance among the M energy storage sub-modules which participate in switching on in the energy storage system may be realized.

Optionally, in a case that the energy storage system is discharged, n energy storage sub-modules with the maximum SOCs in the M energy storage sub-modules are selected.

When the energy storage system needs n energy storage sub-modules to be switched on, n energy storage sub-modules are selected from the M energy storage sub-modules to be switched on in the energy storage system. When the system is discharged, the battery module in the energy storage sub-module is also in the discharging state, and at this time, the power module connected to the battery module needs to be switched on in the energy storage system.

In the above solution, when M energy storage sub-modules meet the switching strategy, n energy storage sub-modules are selected from the M energy storage sub-modules to be switched into the energy storage system. In a case that the system is discharged, n energy storage sub-modules with the maximum SOCs are selected to be in switched-on states, that is, the n energy storage sub-modules with the maximum SOCs are discharged, and the remaining energy storage sub-modules with low SOCs in the M energy storage sub-modules are kept still, so that the SOC imbalance problem among the M energy storage sub-modules is solved to the greatest degree.

Optionally, in the case that I₁ is less than I₂ and M is less than n, the energy storage system may be controlled to decrease the value of n, or the energy storage system is controlled to be shut down, where, I₁ is a minimum charge-discharge limiting current in the charge-discharge limiting currents of the N energy storage sub-modules, I₂ is the charge-discharge limiting current of the energy storage system, M is a number of the energy storage sub-modules of which the charge-discharge limiting currents are not less than I₂, and n is a number of the energy storage sub-modules needing to be switched on.

The energy storage system determines the number of energy storage sub-modules needing to be switched on according to its own needs. When the number of the energy storage sub-modules that can participate in switching on in the energy storage system is not enough to meet the requirements of the energy storage system, the energy storage system cannot normally work.

In the above scheme, n is the number of energy storage sub-modules needing to be switched on in the energy storage system. When the number M of the energy storage sub-modules of which the charge-discharge limiting current is greater than that of the energy storage system is less than n, the number of the energy storage sub-modules that meet the switching requirements cannot meet the requirements of the energy storage system. At this time, the energy storage system needs to reduce the output power, that is, reduce the number of energy storage sub-modules needing to be switched on in the energy storage system to maintain the normal operation of the system or shut down the system.

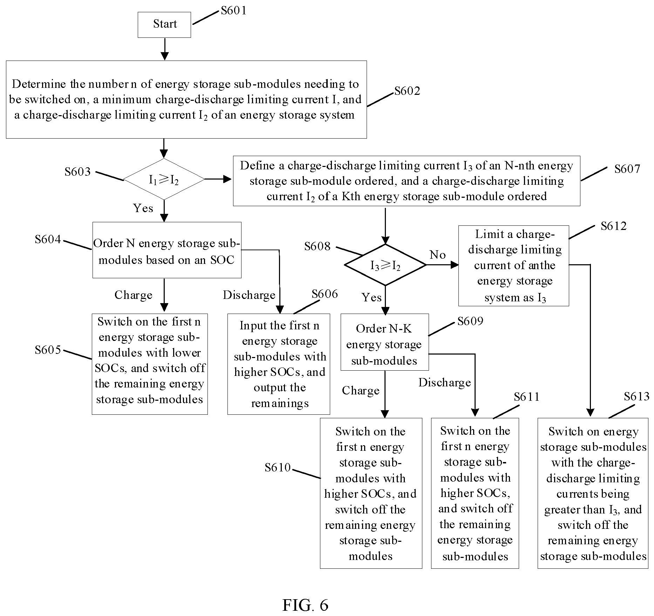

FIG. 6 is a flowchart of a control method of an energy storage system according to another embodiment of the present application. Steps in the present embodiment similar to those in the foregoing embodiments may be referred to in the foregoing embodiments, and are not described here for brevity.

Step S601: starting.

Step S602: determining the number n of energy storage sub-modules needing to be switched on, the minimum charge-discharge limiting current I₁, and the charge-discharge limiting current I₂ of the energy storage system.

Step S603, determining whether I₁ is greater than or equal to I₂.

In step S604, if I₁ is greater than or equal to I₂, ordering the N energy storage sub-modules based on the SOC.

Step S605, in a case of charging, selecting the first n energy storage sub-modules with lower SOCs to be switched on, and the remaining energy storage sub-modules in a switched-off state.

Step S606, in a case of discharging, selecting the first n energy storage sub-modules with higher SOCs to be switched on, and the remaining energy storage sub-modules in a switched-off state.

Step S607: if I₁ is less than I₂, defining the charge-discharge limiting current of an N-nth energy storage sub-module ordered as I₃, and the charge-discharge limiting current of a Kth energy storage sub-module (K) ordered as I₂.

The Kth energy storage sub-module is an energy storage sub-module which is infinitely close to the charge-discharge limiting current of the energy storage system after ordering.

Step S608, determining whether I₃ is greater than or equal to I₂.

Step S609, if I₃ greater than or equal to I₂, ordering the N-K energy storage sub-modules based on the SOC.

Step S610, in a case of charging, selecting the first n energy storage sub-modules with lower SOCs to be switched on, and taking the remaining energy storage sub-modules in a switched-off state.

Step S611, in a case of discharging, selecting the first n energy storage sub-modules with higher SOCs to be switched on, and taking the remaining energy storage sub-modules in a switched-off state.

Step S612: if I₃ is less than I₂, limiting the charge-discharge limiting current of the energy storage system as I₃.

If the energy storage system continues to maintain the charge-discharge limiting current as I₂, the number of energy storage sub-modules that meet the switched-on requirements can no longer meet the requirements of the energy storage system, so that it is necessary to reduce the charge-discharge limit current of the energy storage system to meet the power requirement of the energy storage system.

Step S613, switching on the energy storage sub-module of which the charge-discharge limiting currents are greater than I₃ in the energy storage system, and taking the remaining energy storage sub-modules in a switched-off state.

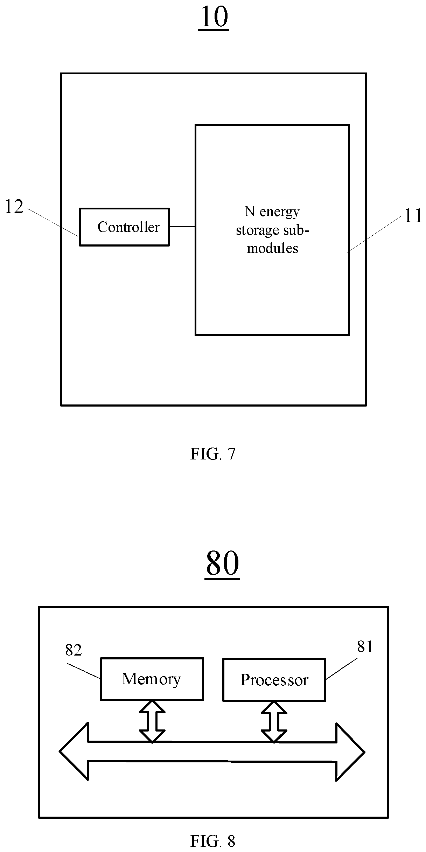

An embodiment of the present application further provides an energy storage system. FIG. 7 is a schematic block diagram of an energy storage system according to an embodiment of the present application. As shown in FIG. 7, the energy storage system 10 includes: N energy storage sub-modules 11, where N is a positive integer greater than 1; and a controller 12, configured to acquire an SOC and a charge-discharge limiting current of each energy storage sub-module in the N energy storage sub-modules 11, and control working states of the N energy storage sub-modules 11 according to the SOC and the charge-discharge limiting current of each energy storage sub-module, where the working states include a switch-on state or a switch-off state.

Optionally, the controller 12 is configured to: acquire a charge-discharge limiting current of an energy storage system; and controlling states of the N energy storage sub-modules 11 includes: controlling the states of the N energy storage sub-modules 11 according to the SOC of each energy storage sub-module, the charge-discharge limiting current of each energy storage sub-module, and the charge-discharge limiting current of the energy storage system.

Optionally, the controller 12 is configured to: determine n energy storage sub-modules in the N energy storage sub-modules 11 according to the SOC of each energy storage sub-module, control the n energy storage sub-modules to be in switched-on states, and control remaining energy storage sub-modules 11 in the N energy storage sub-modules to be in switched-off states in a case that I₁ is greater than or equal to I₂, where, I₁ is a minimum charge-discharge limiting current in the charge-discharge limiting currents of the N energy storage sub-modules 11, I₂ is the charge-discharge limiting current of the energy storage system, and n is a number of the energy storage sub-modules needing to be switched on.

Optionally, the controller 12 is configured to: select n energy storage sub-modules with minimum SOCs from the N energy storage sub-modules 11 in a case that the energy storage system is charged.

Optionally, the controller 12 is configured to: select n energy storage sub-modules with maximum SOCs from the N energy storage sub-modules 11 in a case that the energy storage system is discharged.

Optionally, the controller 12 is configured to: determine n energy storage sub-modules in the M energy storage sub-modules according to the SOC of each energy storage sub-module, control the n energy storage sub-modules to be in switched-on states, and control remaining energy storage sub-modules in the M energy storage sub-modules to be in switched-off states in a case that I₁ is less than I₂ and M is greater than or equal to n, where, I₁ is a minimum charge-discharge limiting current in the charge-discharge limiting currents of the N energy storage sub-modules, I₂ is the charge-discharge limiting current of the energy storage system, M is a number of the energy storage sub-modules of which the charge-discharge limiting currents are not less than I₂, the M energy storage sub-modules are energy storage modules of which the charge-discharge limiting currents are not less than that of the energy storage system, and n is a number of the energy storage sub-modules needing to be switched on.

Optionally, the controller 12 is configured to: select n energy storage sub-modules with minimum SOCs from the M energy storage sub-modules in a case that the energy storage system is charged.

Optionally, the controller 12 is configured to: select n energy storage sub-modules with maximum SOCs from the M energy storage sub-modules in a case that the energy storage system is discharged.

Optionally, the controller 12 is configured to: control the energy storage system to decrease the value of n or control the energy storage system to be shut down in the case that I₁ is less than I₂ and M is less than n, where, I₁ is a minimum charge-discharge limiting current in the charge-discharge limiting currents of the N energy storage sub-modules, I₂ is the charge-discharge limiting current of the energy storage system, M is a number of the energy storage sub-modules of which the charge-discharge limiting currents are not less than I₂, and n is a number of the energy storage sub-modules needing to be switched on.

An embodiment of the present application further provides a device for controlling an energy storage system. As shown in FIG. 8, the device 80 for controlling the energy storage system includes a processor 81 and a memory 82, where, the memory 82 is configured to store a computer program, and the processor 81 is configured to call the computer program, so as to enable the device 80 to implement the methods of the various embodiments of the present application.

An embodiment of the present application further provides a readable storage medium. The readable storage medium stores a computer program. The computer program, when executed by a computing device, enables the computing device to implement the methods of the various embodiments of the present application.

## Claims

1. A control method for an energy storage system, wherein the energy storage system comprises N energy storage sub-modules, N being a positive integer greater than 1, the method comprising:
acquiring an SOC and a charge-discharge limiting current of each of the N energy storage sub-modules; and
controlling working states of the N energy storage sub-modules according to the SOC and the charge-discharge limiting current of each of the energy storage sub-modules, the working states comprising a switched-on state and a switched-off state.

2. The control method according to claim 1, wherein the method further comprises:
acquiring a charge-discharge limiting current of the energy storage system; and
controlling states of the N energy storage sub-modules comprising:
controlling the states of the N energy storage sub-modules according to the SOC of each of the energy storage sub-modules, the charge-discharge limiting current of each of the energy storage sub-modules, and the charge-discharge limiting current of the energy storage system.

3. The control method according to claim 2, wherein controlling the states of the N energy storage sub-modules according to the SOC of each of the energy storage sub-modules, the charge-discharge limiting current of each of the energy storage sub-modules, and the charge-discharge limiting current of the energy storage system, comprises:
in a case that I₁ is greater than or equal to I₂, determining n energy storage sub-modules in the N energy storage sub-modules according to the SOC of each of the energy storage sub-modules, controlling the n energy storage sub-modules to be in switched-on states, and controlling remaining energy storage sub-modules in the N energy storage sub-modules to be in switched-off states,
wherein, I₁ is a minimum charge-discharge limiting current in the charge-discharge limiting currents of the N energy storage sub-modules, I₂ is the charge-discharge limiting current of the energy storage system, and n is a number of the energy storage sub-modules to be switched on.

4. The control method according to claim 3, wherein determining n energy storage sub-modules, comprises:
in a case that the energy storage system is charged, selecting the n energy storage sub-modules with minimum SOCs from the N energy storage sub-modules.

5. The control method according to claim 3, wherein determining n energy storage sub-modules, comprises:
in a case that the energy storage system is discharged, selecting the n energy storage sub-modules with maximum SOCs from the N energy storage sub-modules.

6. The control method according to claim 2, wherein controlling the states of the N energy storage sub-modules according to the SOC of each of the energy storage sub-modules, the charge-discharge limiting current of each of the energy storage sub-modules, and the charge-discharge limiting current of the energy storage system, comprises:
in a case that I₁ is less than I₂ and M is greater than or equal to n, determining n energy storage sub-modules in the M energy storage sub-modules according to the SOC of each of the energy storage sub-modules, controlling the n energy storage sub-modules to be in switched-on states, and controlling remaining energy storage sub-modules in the M energy storage sub-modules to be in switched-off states,
wherein, I₁ is a minimum charge-discharge limiting current in the charge-discharge limiting currents of the N energy storage sub-modules, I₂ is the charge-discharge limiting current of the energy storage system, M is a number of the energy storage sub-modules of which the charge-discharge limiting currents are not less than I₂, the M energy storage sub-modules are the energy storage sub-modules of which the charge-discharge limiting currents are not less than that of the energy storage system, and n is a number of the energy storage sub-modules needing to be switched on.

7. The control method according to claim 6, wherein determining n energy storage sub-modules, comprises:
in a case that the energy storage system is charged, selecting the n energy storage sub-modules with minimum SOCs from the M energy storage sub-modules.

8. The control method according to claim 6, wherein determining n energy storage sub-modules, comprises:
in a case that the energy storage system is discharged, selecting the n energy storage sub-modules with maximum SOCs from the M energy storage sub-modules.

9. The control method according to claim 2, wherein the method further comprises:
in a case that I₁ is less than I₂ and M is less than n, controlling the energy storage system to decrease a value of n, or controlling the energy storage system to be shut down,
wherein, I₁ is a minimum charge-discharge limiting current in the charge-discharge limiting currents of the N energy storage sub-modules, I₂ is a charge-discharge limiting current of the energy storage system, M is the number of the energy storage sub-modules of which the charge-discharge currents are not less than I₂, and n is the number of the energy storage sub-modules needing to be switched on.

10. An energy storage system, wherein the energy storage system comprises:
N energy storage sub-modules, N being a positive integer greater than 1; and
a controller, configured to acquire an SOC and a charge-discharge limiting current of each of the energy storage sub-module in the N energy storage sub-modules, and controlling working states of the N energy storage sub-modules according to the SOC and the charge-discharge limiting current of each of the energy storage sub-modules, the working states comprising a switched-on state and a switched-off state.

11. The energy storage system according to claim 10, wherein the controller is configured to:
acquire a charge-discharge limiting current of the energy storage system; and
controlling states of the N energy storage sub-modules, comprises:
controlling the states of the N energy storage sub-modules according to the SOC of each of the energy storage sub-modules, the charge-discharge limiting current of each of the energy storage sub-modules, and the charge-discharge limiting current of the energy storage system.

12. The energy storage system according to claim 11, wherein the controller is configured to:
in a case that I₁ is greater than or equal to I₂, determining n energy storage sub-modules in the N energy storage sub-modules according to the SOC of each of the energy storage sub-modules, controlling the n energy storage sub-modules to be in switched-on states, and controlling remaining energy storage sub-modules in the N energy storage sub-modules to be in switched-off states,
wherein, I₁ is a minimum charge-discharge limiting current in the charge-discharge limiting currents of the N energy storage sub-modules, I₂ is the charge-discharge limiting current of the energy storage system, and n is a number of the energy storage sub-modules needing to be switched on.

13. The energy storage system according to claim 12, wherein the controller is configured to:
in a case that the energy storage system is charged, select n energy storage sub-modules with minimum SOCs from the N energy storage sub-modules.

14. The energy storage system according to claim 12, wherein the controller is configured to:
in a case that the energy storage system is discharged, select the n energy storage sub-modules with maximum SOCs from the N energy storage sub-modules.

15. The energy storage system according to claim 11, wherein the controller is configured to:
in a case that I₁ is less than I₂ and M is greater than or equal to n, determine energy storage sub-modules in the M energy storage sub-modules according to the SOC of each of the energy storage sub-modules, control the n energy storage sub-modules to be in switched-on states, and control remaining energy storage sub-modules in the M energy storage sub-modules to be in switched-off states,
wherein, I₁ is a minimum charge-discharge limiting current in the charge-discharge limiting currents of the N energy storage sub-modules, I₂ is the charge-discharge limiting current of the energy storage system, M is a number of the energy storage sub-modules of which the charge-discharge limiting currents are not less than I₂, the M energy storage sub-modules are the energy storage sub-modules of which the charge-discharge limiting currents are not less than that of the energy storage system, and n is a number of the energy storage sub-modules needing to be switched on.

16. The energy storage system according to claim 15, wherein the controller is configured to:
in a case that the energy storage system is charged, select the n energy storage sub-modules with minimum SOCs from the M energy storage sub-modules.

17. The energy storage system according to claim 15, wherein the controller is configured to:
in a case that the energy storage system is discharged, select the n energy storage sub-modules with maximum SOCs from the M energy storage sub-modules.

18. The energy storage system according to claim 11, wherein the controller is further configured to:
in a case that I₁ is less than I₂ and M is less than n, control the energy storage system to decrease a value of n, or control the energy storage system to be shut down,
wherein, I₁ is a minimum charge-discharge limiting current in the charge-discharge limiting currents of the N energy storage sub-modules, I₂ is the charge-discharge limiting current of the energy storage system, M is the number of the energy storage sub-modules of which the charge-discharge currents are not less than I₂, and n is the number of the energy storage sub-modules needing to be switched on.

19. A device for controlling an energy storage system, wherein the device comprises a processor and a memory, the memory being configured to store a computer program, and the processor being configured to invoke the computer program to enable the device to implement the method of any one of claims 1-9.

20. A readable storage medium, wherein the readable storage medium stores a computer program, and the computer program, when executed by a computing device, enables the computing device to implement the method of any one of claims 1-9.
